# EUROPEAN PATENT SPECIFICATION

(11) **EP 1 771 080 B1**
(45) Date of publication and mention of the grant of the patent: **24.08.2011**
(21) Application number: 05761595.7
(22) Date of filing: 05.07.2005
(51) Int. Cl.: A23G 1/54

(54) **CONFECTIONERY PRODUCT**
SÜSSWARE
PRODUIT DE CONFISERIE

(30) Priority: 05.07.2004 GB 0415038
(43) Date of publication of application: 11.04.2007
(73) Proprietor: Cadbury Holdings Limited, Uxbridge, Middlesex UB8 1DH (GB)
(72) Inventor: JONES, Mark Edward, Cadbury Schweppes Plc, London (GB)
(74) Representative: Wilson Gunn
(86) International application number: PCT/GB2005/002625
(87) International publication number: WO 2006/003437

(56) References cited:
- EP-A- 0 583 765
- EP-A- 0 768 039
- EP-A- 1 002 464
- EP-A- 1 018 302
- WO-A-93/00267
- DE-B- 1 297 454
- DE-U1- 29 518 414
- GB-A- 1 421 516
- US-A- 5 925 391

## Description

The present invention relates to confectionery products and particularly, but not exclusively, to chocolate Easter eggs.

It is known to manufacture Easter eggs by separately moulding two halves of a chocolate shell, which when secured together form a hollow egg-shaped chocolate product. It is also known to manufacture a hollow egg-shaped chocolate product as a unitary item by means of a spin moulding process. It is common to include within the Easter egg a polythene or polypropylene film bag charged with small confectionery items, such as candies.

US 5,925,391 (Whetstone, Jr.) describes a confectionery item comprising a hollow shell made of a non-edible material for receiving a toy or edible item. The shell is egg-shaped and is formed in two halves, with a layer of chocolate or other edible material on the outer surface of each half of the shell.

The present invention seeks to provide a new confectionery product, which in one embodiment is in the form of an Easter egg.

According to the present invention there is provided a confectionery product comprising a first hollow chocolate body, located within a second hollow chocolate body, characterised in that the exterior of the first hollow chocolate body is covered with a layer of inedible protective material.

It is considered that this new product will be highly desirable to consumers.

In one embodiment the protective material, which may be a foil, is free from printing. This is because mechanical scuffing, arising from movement of the inner first body within the outer second body, may lead to transfer of the ink to the outer body and hence tainting of the outer body. Alternatively, the protective layer may be printed with an ink which is suitable for direct contact with a food product. A lacquer may be applied to the foil to lubricate it as it passes through the foil machine during manufacture of the product. A vinyl based lacquer may be used.

One or more further hollow chocolate bodies may be provided within the first body and/or around the second body.

One or more further confectionery items and/or gift items may be provided in the hollow of the innermost chocolate body and/or between adjacent chocolate bodies.

The weight of the first chocolate body may be in the range from 60g to 125g and in one embodiment is in the range from 109g to 125g.

The weight of the second chocolate body may be in the range from 120g to 290g and in one embodiment is in the range from 278g to 290g.

Each chocolate body may be moulded in two parts. The two parts of the first chocolate body may be joined together. Alternatively, the first chocolate body may be formed in one piece.

The shell dimensions (per half), in millimetres, for the first chocolate body may be substantially 108 x 72 x 35.

The shell dimensions (per half), in millimetres, for the second chocolate body may be substantially 151 x 100 x 50.5 or 131 x 90 x 45.

The thickness of the wall of the first chocolate body may be in the range from 2.8mm to 4.8mm, and in one embodiment is in the range from 4.6mm to 4.8mm.

The thickness of the wall of the second chocolate body may be in the range from 3.0mm to 5.8mm and in one embodiment is in the range from 4.0mm to 5.8mm.

The first and second chocolate bodies may be Easter eggs.

In order that the present invention may be more readily understood, specific embodiments thereof will now be described, by way of example only, with reference to the accompanying drawings in which:-
Fig. 1 is a first chocolate product in accordance with the present invention; and
Fig. 2 is a second chocolate product in accordance with the present invention.

In the drawings the same reference numerals are used to illustrate like parts.

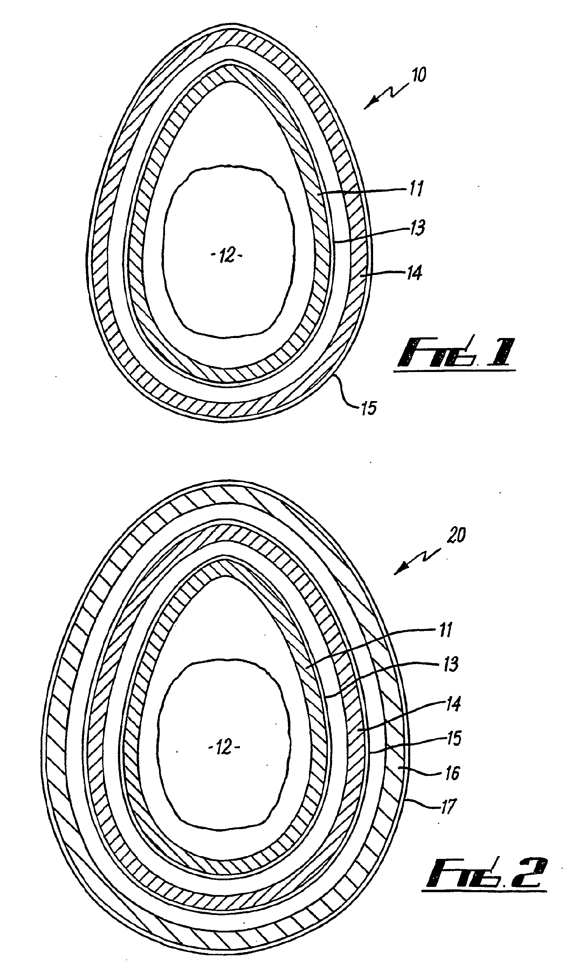

Referring to Fig. 1 there is provided an Easter egg 10 comprising a first inner chocolate egg 11 made in two halves in conventional fashion. The inner egg is hollow and encapsulates one or more novelty gifts or confectionery products. The gifts/confectionery products could be wrapped in a bag 12 of plastics material such as polythene or polypropylene. The interior of the first egg is not wrapped. The exterior of the first egg is wrapped with a layer of protective material, which in this embodiment is an aluminium foil 13 coated with a vinyl lacquer. This aluminium foil 13 is free of ink printing. In alternative embodiments, the protective layer can be formed from any suitable material and may be uncoated or coated in materials other than a vinyl lacquer. In a further alternative embodiment, the protective layer may be printed on using an ink or inks which are suitable for direct contact with food products.

The two halves of the first egg 11 may simply be held together by means of the protective layer 13 or they may be physically joined together. One method of joining the two halves together is to heat the rim of at least one of the halves to melt the chocolate at the rim before placing the two halves together. As the melted chocolate re-sets, the two halves will be joined to each other. Alternatively, the first egg 11 may be formed in one piece using a spin moulding technical known in the art.

A second egg 14, made in conventional fashion in two halves encapsulates the first egg such that a gap is provided between the two eggs 11, 14, albeit that the base of the first egg rests on the second egg. The inside of the second egg is not wrapped. The exterior of the second egg is wrapped with a layer of protective material that in this embodiment is also an aluminium foil 15. Such foil is printed with ink in conventional fashion to make the product attractive to the consumer. In alternative embodiments the protective layer can be formed from any suitable material such as a clear plastics material and need not be printed on. The two halves of the second egg 14 may be held together by the layer of protective foil 15 or they may be joined together as described in relation to the first, inner egg 11.

In the present embodiment, the shell dimensions (per half), in millimetres, for the inner first egg 112 are substantially 108 x 72 x 35 and the thickness of the wall of the inner egg is in the range from 2.8mm to 4.8mm, and, more particularly, in the range from 4.6mm to 4.8mm. Accordingly, the weight of the inner first egg 11 is in the range from 60g to 125g and, more particularly, in the range from 109g to 125g.

Also in the present embodiment, the shell dimensions (per half), in millimetres, for the second outer egg 14 are substantially 151 x 100 x 50.5 or 131 x 90 x 45 and the thickness of the wall of the second outer egg is in the range from 3.0mm to 5.8mm and, more particularly, in the range from 4.0mm to 5.8mm. Accordingly, the weight of the second chocolate body is in the range from 120g to 290g and, more particularly, in the range from 278g to 290g.

It will be appreciated that the dimensions of the first inner egg 11 and/or the second outer egg 14 can be varied as required and that the invention is not necessarily limited to confectionary products having the dimensions set out above.

Referring to Fig. 2 a second embodiment 20 of the invention is shown. This is similar to that illustrated in Fig. 1 except in that the foil 15 surrounding the second egg 14 is not printed with ink, but is instead the same as that used to wrap the first egg 11 of Fig. 1. Alternatively, the foil 15 surrounding the second egg 14 may be printed on with an ink or inks that are suitable for direct contact with food products.

A third egg 16, manufactured in two halves in conventional fashion encapsulates the second egg 14 such that a gap is provided between the two eggs 14, 16, albeit that the base of the second egg 14 rests on the third egg 16. The inside of the third egg 16 is not wrapped. The exterior of the third egg 16 is wrapped with aluminium foil 17. Such foil 17 is printed with ink in conventional fashion to make the product attractive to the consumer.

Whereas the invention has been described in relation to what is presently considered to be the most practical and preferred embodiments, it is to be understood that the invention is not limited to the disclosed arrangements but rather is intended to cover various modifications and equivalent constructions falling within the scope of the invention as defined in the accompanying claims. For example, whilst the invention has been described in relation to Easter eggs it can be equally applied to products in which the chocolate bodies have different shapes. For example the hollow chocolate bodies may be formed in the shape of characters, such as chocolate Santas, or in the form of chocolate Russian dolls.

Were the terms "comprise", "comprises", "comprised" or "comprising" are used in this specification, they are to be interpreted as specifying the presence of the stated features, integers, steps or components referred to, but not to preclude the presence or addition of one or more other feature, integer, step, component or group thereof.

## Claims

1. A confectionery product (10; 20) comprising a first hollow chocolate body (11), located within a second hollow chocolate body (14), **characterised in that** the exterior of the first hollow chocolate body is covered with a layer of inedible protective material (13).

2. A confectionery product (10; 20) as claimed in claim 1, in which the thickness of the wall of the second chocolate body (14) is in the range from 3.0mm to 5.8mm.

3. A confectionery product (10; 20) as claimed in claim 1 or claim 2, in which the thickness of the wall of the second chocolate body (14) is in the range from 4.0mm to 5.8mm.

4. A confectionery product (10; 20) as claimed in any one of claims 1 to 3, in which the protective material (13) is a foil.

5. A confectionery product (10; 20) as claimed in any one of claims 1 to 4, in which the layer of protective material (13) is free from printing.

6. A confectionery product (10; 20) as claimed in any one of claims 1 to 5, in which the layer of protective material (13) is printed on using an ink or inks suitable for direct contact with a food product.

7. A confectionery product (10; 20) as claimed in any one of the preceding claims, in which the layer of protective material (13) is coated in a lacquer.

8. A confectionery product (10; 20) as claimed in claim 7, in which the lacquer is a vinyl based lacquer.

9. A confectionery product (20) as claimed in any one of the preceding claims, in which at least one further hollow chocolate body (16) is provided within the first body and/or around the second body (14).

10. A confectionery product (10; 20) as claimed in any one of the preceding claims, in which at least one further confectionery item and/or gift item (12) is provided in the hollow of the innermost chocolate body (11) and/or between adjacent chocolate bodies (11, 14, 16).

11. A confectionery product (10; 20) as claimed in any one of the preceding claims, in which the weight of the first chocolate body (11) is in the range from 60g to 125g.

12. A confectionery product (10; 20) as claimed in any one of the preceding claims, in which the weight of the first chocolate body (11) is in the range from 109g to 125g.

13. A confectionery product (10; 20) as claimed in any one of the preceding claims, in which the weight of the second chocolate body (14) is in the range from 120g to 290g.

14. A confectionery product (10; 20) as claimed in any one of the preceding claims, in which the weight of the second chocolate body (14) is in the range from 278g to 290g.

15. A confectionery product (10; 20) as claimed in any one of the preceding claims, in which each chocolate body (11, 14) is moulded in two parts.

16. A confectionery product (10; 20) as claimed in claim 15, in which the two parts forming the first chocolate body (11) are joined together.

17. A confectionery product (10; 20) as claimed in any one of claims 1 to 14, in which the first chocolate body (11) is formed in one piece.

18. A confectionery product (10; 20) as claimed in any one of the preceding claims, in which the shell dimensions (per half), in millimetres, for the first chocolate body (11) are 108 x 72 x 35.

19. A confectionery product (10; 20) as claimed in any one of the preceding claims, in which the shell dimensions (per half), in millimetres, for the second chocolate body (14) are 151x100x50.5 or 131 x 90 x 45.

20. A confectionery product (10; 20) as claimed in any one of the preceding claims, in which the thickness of the wall of the first chocolate body (11) is in the range from 2.8mm to 4.8mm.

21. A confectionery product (10; 20) as claimed in any one of the preceding claims, in which the thickness of the wall of the first chocolate body (11) is in the range from 4.6mm to 4.8mm.

22. A confectionery product (10; 20) as claimed in any one of the preceding claims, in which the first and second chocolate bodies (11, 14) are Easter eggs.

## Patentansprüche

1. Süßwarenprodukt (10; 20) mit einem ersten hohlen Schokoladenkörper (11), der innerhalb eines zweiten hohlen Schokoladenkörpers (14) angeordnet ist, **dadurch gekennzeichnet,**
**dass** das Äußere des ersten hohlen Schokoladenkörpers mit einer Schicht eines nicht essbaren Schutzmaterials (13) bedeckt ist.

2. Süßwarenprodukt (10; 20) nach Anspruch 1,
bei dem die Dicke der Wandung des zweiten Schokoladenkörpers (14) in dem Bereich von 3,0 mm bis 5,8 mm liegt.

3. Süßwarenprodukt (10; 20) nach Anspruch 1 oder 2,
bei dem die Dicke der Wandung des zweiten Schokoladenkörpers (14) in dem Bereich von 4,0 mm bis 5,8 mm liegt.

4. Süßwarenprodukt (10; 20) nach einem der Ansprüche 1 bis 3,
bei dem das Schutzmaterial (13) eine Folie ist.

5. Süßwarenprodukt (10; 20) nach einem der Ansprüche 1 bis 4,
bei dem die Schicht des Schutzmaterials (13) nicht bedruckt ist.

6. Süßwarenprodukt (10; 20) nach einem der Ansprüche 1 bis 5,
bei dem die Schicht des Schutzmaterials (13) unter Verwendung von Tinte oder Tinten, welche für einen direkten Kontakt mit einem Lebensmittelprodukt geeignet sind, bedruckt sind.

7. Süßwarenprodukt (10; 20) nach einem der vorstehenden Ansprüche,
bei dem die Schicht des Schutzmaterials (13) mit einem Lack beschichtet ist.

8. Süßwarenprodukt (10; 20) nach Anspruch 7,
bei dem der Lack ein Lack auf Vinylbasis ist.

9. Süßwarenprodukt (20) nach einem der vorstehenden Ansprüche,
bei dem zumindest ein weiterer hohler Schokoladenkörper (16) innerhalb des ersten Körpers und/oder um den zweiten Körper (14) herum angeordnet ist.

10. Süßwarenprodukt (10; 20) nach einem der vorstehenden Ansprüche,
bei dem zumindest ein weiterer Süßwarenartikel und/oder Geschenkartikel (12) in dem Hohlraum des innersten Schokoladenkörpers (11) und/oder zwischen benachbarten Schokoladenkärpern (11, 14, 16) vorgesehen ist.

11. Süßwarenprodukt (10; 20) nach einem der vorstehenden Ansprüche,
bei dem das Gewicht des ersten Schokoladenkörpers (11) in dem Bereich von 60 g bis 125 g liegt,

12. Süßwarenprodukt (10; 20) nach einem der vorstehenden Ansprüche,
bei dem das Gewicht des ersten Schokoladenkörpers (11) in dem Bereich von 109 g bis 125 g liegt.

13. Süßwarenprodukt (10; 20) nach einem der vorstehenden Ansprüche,
bei dem das Gewicht des zweiten Schokoladenkörpers (14) in dem Bereich von 120 g bis 290 g liegt.

14. Süßwarenprodukt (10; 20) nach einem der vorstehenden Ansprüche,
bei dem das Gewicht des zweiten Schokoladenkörpers (14) in dem Bereich von 278 g bis 290 g liegt.

15. Süßwarenprodukt (10; 20) nach einem der vorstehenden Ansprüche,
bei dem jeder Schokoladenkörper (11, 14) in zwei Teilen geformt ist.

16. Süßwarenprodukt (10; 20) nach Anspruch 15,
bei dem die zwei Teile, welche den ersten Schokoladenkörper (11) bilden, miteinander verbunden sind.

17. Süßwarenprodukt (10; 20) nach einem der Ansprüche 1 bis 14,
bei dem der erste Schokoladenkörper (11) in einem Stück ausgebildet ist.

18. Süßwarenprodukt (10; 20) nach einem der vorstehenden Ansprüche,
bei dem die Schalenabmessungen (pro Hälfte), in Millimetern, für den ersten Schokoladenkörper (11) 108 x 72 x 35 sind.

19. Süßwarenprodukt (10; 20) nach einem der vorstehenden Ansprüche,
bei dem die Schalenabmessungen (pro Hälfte), in Millimetern, für den zweiten Schokoladenkörper (14) 151 x 100 x 50,5 oder 131 x 90 x 45 sind.

20. Süßwarenprodukt (10; 20) nach einem der vorstehenden Ansprüche,
bei dem die Dicke der Wandung des ersten Schokoladenkörpers (11) in dem Bereich von 2,8 mm bis 4,8 mm liegt.

21. Süßwarenprodukt (10; 20) nach einem der vorstehenden Ansprüche,
bei dem die Dicke der Wandung des ersten Schokoladenkörpers (11) in dem Bereich von 4,6 mm bis 4,8 mm liegt.

22. Süßwarenprodukt (10; 20) nach einem der vorstehenden Ansprüche,
bei dem die ersten und die zweiten Schokoladenkörper (11, 14) Ostereier sind.

## Revendications

1. Produit de confiserie (10; 20) comprenant un premier corps de chocolat creux (11), situé à l'intérieur d'un deuxième corps de chocolat creux (14), **caractérisé en ce que** l'extérieur du premier corps de chocolat creux est recouvert avec une couche de matériau de protection non comestible (13).

2. Produit de confiserie (10; 20) selon la revendication 1, dans lequel l'épaisseur de la paroi du deuxième corps de chocolat (14) est de l'ordre de 3,0 mm à 5,8 mm.

3. Produit de confiserie (10 ; 20) selon la revendication 1 ou la revendication 2, dans lequel l'épaisseur de la paroi du deuxième corps de chocolat (14) est de l'ordre de 4,0 mm à 5,8 mm.

4. Produit de confiserie (10 ; 20) selon l'une quelconque des revendications 1 à 3, dans lequel le matériau de protection (13) est une feuille.

5. Produit de confiserie (10 ; 20) selon l'une quelconque des revendications 1 à 4, dans lequel la couche de matériau de protection (13) est dépourvue d'impression.

6. Produit de confiserie (10 ; 20) selon l'une quelconque des revendications 1 à 5, dans lequel la couche de matériau de protection (13) est imprimée en utilisant une encre ou des encres appropriées pour le contact direct avec un produit alimentaire.

7. Produit de confiserie (10 ; 20) selon l'une quelconque des revendications précédentes, dans lequel la couche de matériau de protection (13) est recouverte avec une laque.

8. Produit de confiserie (10 ; 20) selon la revendication 7, dans lequel la laque est une laque à base de vinyle.

9. Produit de confiserie (20) selon l'une quelconque des revendications précédentes, dans lequel au moins un autre corps de chocolat creux (16) est prévu à l'intérieur du premier corps et/ou autour du deuxième corps (14).

10. Produit de confiserie (10 ; 20) selon l'une quelconque des revendications précédentes, dans lequel au moins un autre article de confiserie et/ou article formant cadeau (12) est prévu dans le creux du corps de chocolat (11) situé le plus à l'intérieur et/ou entre les corps de chocolat (11, 14, 16) adjacents.

11. Produit de confiserie (10 ; 20) selon l'une quelconque des revendications précédentes, dans lequel le poids du premier corps de chocolat (11) est de l'ordre de 60 g à 125 g.

12. Produit de confiserie (10; 20) selon l'une quelconque des revendications précédentes, dans lequel le poids du premier corps de chocolat (11) est de l'ordre de 109 g à 125 g.

13. Produit de confiserie (10; 20) selon l'une quelconque des revendications précédentes, dans lequel le poids du deuxième corps de chocolat (14) est de l'ordre de 120 g à 290 g.

14. Produit de confiserie (10 ; 20) selon l'une quelconque des revendications précédentes, dans lequel le poids du deuxième corps de chocolat (14) est de l'ordre de 278 g à 290 g.

15. Produit de confiserie (10 ; 20) selon l'une quelconque des revendications précédentes, dans lequel chaque corps de chocolat (11, 14) est moulé en deux parties.

16. Produit de confiserie (10 ; 20) selon la revendication 15, dans lequel les deux parties formant le premier corps de chocolat (11) sont assemblées.

17. Produit de confiserie (10 ; 20) selon l'une quelconque des revendications 1 à 14, dans lequel le premier corps de chocolat (11) est formé d'un seul tenant.

18. Produit de confiserie (10; 20) selon l'une quelconque des revendications précédentes, dans lequel les dimensions de coque (par moitié), en millimètres, pour le premier corps de chocolat (11) sont de 108 x 72 x 35.

19. Produit de confiserie (10 ; 20) selon l'une quelconque des revendications précédentes, dans lequel les dimensions de coque (par moitié), en millimètres, pour le deuxième corps de chocolat (14) sont de 151 x 100 x 50,5 ou 131 x 90 x 45.

20. Produit de confiserie (10 ; 20) selon l'une quelconque des revendications précédentes, dans lequel l'épaisseur de la paroi du premier corps de chocolat (11) est de l'ordre de 2,8 mm à 4,8 mm.

21. Produit de confiserie (10; 20) selon l'une quelconque des revendications précédentes, dans lequel l'épaisseur de la paroi du premier corps de chocolat (11) est de l'ordre de 4,6 mm à 4,8 mm.

22. Produit de confiserie (10; 20) selon l'une quelconque des revendications précédentes, dans lequel les premier et deuxième corps de chocolat (11, 14) sont des oeufs de Pâques.
